# EUROPEAN PATENT SPECIFICATION

(11) **EP 2 052 543 B1**
(45) Date of publication and mention of the grant of the patent: **01.03.2017**
(21) Application number: 07836972.5
(22) Date of filing: 15.08.2007
(51) Int. Cl.: H04N 7/18, H04N 5/268

(54) **CONTROLLER FOR A VIDEO MATRIX SWITCHING SYSTEM**
STEUERGERÄT FÜR EIN VIDEOMATRIX-SCHALTSYSTEM
CONTRÔLEUR POUR SYSTÈME DE COMMUTATION À MATRICE POUR VIDÉO

(30) Priority: 15.08.2006 US 504454
(43) Date of publication of application: 29.04.2009
(73) Proprietor: Sensormatic Electronics, LLC, Boca Raton, FL 33487 (US)
(72) Inventor: SCHIELTZ, Steven, W., Boca Raton, FL 33486 (US); PAOLANTONIO, James, Coral Springs, FL 33071 (US); MCBRIDE, Monte, Charles, Boca Raton, FL 33432 (US); BARCALA, Sergio, Coral Springs, FL 33073 (US); ANDERSON, Luis, Boca Raton, FL 33428 (US)
(74) Representative: Hafner & Kohl
(86) International application number: PCT/US2007/018230
(87) International publication number: WO 2008/021480

(56) References cited:
- WO-A-00/76208
- WO-A-98/09432
- US-A- 6 160 544
- US-A1- 2001 024 240
- US-A1- 2002 112 242

## Description

### BACKGROUND OF THE INVENTION

### Field of the Invention

This invention relates generally to closed circuit television systems, and more particularly, to modular controllers for video switching systems.

### Description of the Related Art

The largest and most sophisticated users of closed circuit television (CCTV) systems include airports, corporate or government complexes, casinos, and large medical centers. CCTV systems installed by such users may start with a single central processing unit (CPU) and switcher bay, but many users will eventually need to install upgrades and enhancements as their needs grow. Such enhancements may include expansion of the number of CCTV cameras from tens or hundreds up to a thousand or more.

At least one known expanded CCTV system has utilized two independent central processing units (CPUs) and a hot switch product that senses the operation of the CPUs. The hot switch product has double pole relays configured to switch controlling signals from a failed CPU to a stand-by CPU. However, large CCTV systems with hot switch products require extra modules and/or physical boxes and significantly increase system cost as the number of ports increases. Increasing the number of ports above a predetermined amount is difficult and expensive.

WO 00/76208 A2 discloses a system and method for monitoring video inputs. The system includes a control network portal coupled between the Internet and one or more control area networks. The control area networks are used to control Internet appliances.

WO 98/09432 A1 teaches a modular multiplexing system. The multiplexing system includes a display and control module, home run multiplexer module and a loop multiplexer module. Multiple cameras can be connected to a single loop of coaxial cable or they can be connected by multiple nonlooping cable runs.

US 6,160,544 A teaches a digital video distribution system having a plurality of video distributors, transmitter terminals and receiver terminals. Between the transmitter terminals and the receiver terminals a hub is located. The transmitter terminals include encoders to encode said convert analog video information to digitally compressed video information and the receiver terminals include respective decoders.

US 2002/0112242 A1 shows a multi-mode video processor that processes a plurality of terminal controllers.

### BRIEF DESCRIPTION OF THE INVENTION

The invention is as defined in claims 1 or claims 13.

In one embodiment, a controller for a video matrix switching system is provided. The controller may include at least a first multiple purpose unit (MPU) module configured to provide video and control for a multi-camera video CCTV system, and at least a first port module connectable to the MPU module and having driver electronics for a set of interface ports.

In some, but not necessarily all embodiments, the interface ports may include both a plurality of communications ports and one or more data line ports. Also, the MPU module may include a watchdog module configured to present an interface that monitors specified tasks and takes action when any of the specified tasks time out.

It will be appreciated that various embodiments of the present invention provide a hot switched, stand-by CPU that may be configured to control a large video matrix system, for example, one containing over one thousand cameras and perhaps hundreds of keyboards, displays, and controls. Various embodiments of the present invention may provide such control using high speed data lines and many RS-232 ports that are controlled by the CPU to facilitate the switch over. Such embodiments reduce or minimize the number of component parts (e.g., boxes) required and can avoid the use of relay technology.

The foregoing summary, as well as the following detailed description of certain embodiments of the present invention, will be better understood when read in conjunction with the appended drawings. To the extent that the figures illustrate diagrams of the functional blocks of various embodiments, the functional blocks are not necessarily indicative of the division between hardware circuitry. Thus, for example, one or more of the functional blocks (e.g., processors or memories) may be implemented in a single piece of hardware (e.g., a general purpose signal processor or a block or random access memory, hard disk, or the like). Similarly, the programs may be stand alone programs, may be incorporated as subroutines in an operating system, may be functions in an installed software package, and the like. It should be understood that the various embodiments are not limited to the arrangements and instrumentality shown in the drawings.

### BRIEF DESCRIPTION OF THE DRAWINGS

Figure 1 is a pictorial block diagram of a closed circuit television (CCTV) system.
Figure 2 is a block diagram showing physical and electrical connections between a multiple purpose unit (MPU) and a first port module and between the first port module and a second port module.
Figure 3 is a electrical block diagram of a multiple purpose unit (MPU) module.
Figure 4 is a pictorial representation of the rear panels of a connected port module and an MPU module. The covers of each module are shown removed, but for the sake of simplicity, Figure 4 does not show the electronic components that are inside of the port module and the MPU module.
Figure 5 is a schematic pictorial representation of a port module as seen from the rear.
Figure 6 is a schematic pictorial representation of a port module as seen from the front.
Figure 7 is a block diagram of two connected port modules, each connected to an MPU module.

### DETAILED DESCRIPTION OF THE INVENTION

As used herein, an element or step recited in the singular and proceeded with the word "a" or "an" should be understood as not excluding plural of said elements or steps, unless such exclusion is explicitly stated. Furthermore, references to "one embodiment" of the present invention are not intended to be interpreted as excluding the existence of additional embodiments that also incorporate the recited features. Moreover, unless explicitly stated to the contrary, embodiments "comprising" or "having" an element or a plurality of elements having a particular property may include additional such elements not having that property.

Certain terms used herein may be defined as follows:
Selected Unit: This term refers to a multiple purpose unit (MPU) module that may actively drive data line ports and communications port transmitters. Because both MPU modules of a connected pair may be powered and actively processing incoming data, the term "selected" as used herein identifies the module that is performing the driving.

Backup Unit: This term refers to a MPU module that is not actively driving data line ports and communications port transmitters, but that may actively process incoming data so as to be able to hot switch over in case of a failure of the selected unit.

Lower Unit: This term refers to a port module that may have communications ports configured with lower (smaller) numbers. For example, a port module that has sixteen RS-232 communications ports configured as ports 1 through 16 is a "lower unit." In some embodiments, the lower unit may also have a "Higher/Lower" port selection switch that is set to "Lower," and be driving two data port lines as 1 and 2. Higher Unit: This term refers to a port module that may have communications ports configured with higher (larger) numbers. For example, a port module that has sixteen RS-232 ports 18 configured as ports 17 through 32 is an "upper unit." In some embodiments, the upper unit may also have a "Higher/Lower" port selection switch set to "Higher," and be driving two data port lines as 3 and 4.

Local: This term is a relative modifier and refers to any component that is in the same rack space (e.g., 1RU rack space) as a particular component under discussion.

Remote: This term is a relative modifier and refers to an interconnected MP CPU or any components of the MP CPU that are in an adjoining rack space as a particular component under discussion.

For simplicity and ease of explanation, the invention will be described herein in connection with various embodiments thereof. Those skilled in the art will recognize, however, that the features and advantages of the various embodiments may be implemented in a variety of configurations. It is to be understood, therefore, that the embodiments described herein are presented by way of illustration, not of limitation.

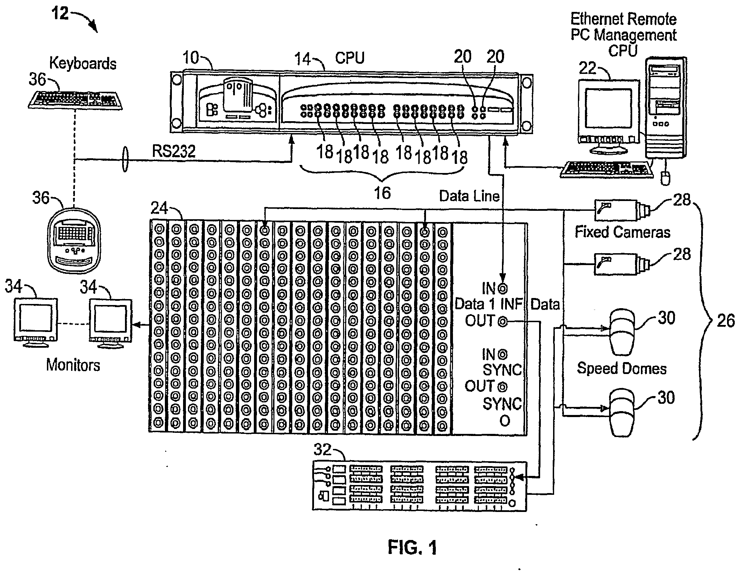

In some embodiments of the present invention and referring to FIG. 1, a central processing unit (CPU) in a multiple purpose unit (MPU) module 10 controls at least a portion of a video matrix switch system 12. At least one port module 14 also may be provided. MPU module 10 is a multiple purpose unit video and control module, which, in some embodiments, can be used for many video system functions and software applications. Port module 14 may operatively connect to the MPU module 10 and may provide driver electronics for a plurality of interface ports 16, which, in some embodiments, may comprise 16 RS-232 communications ports 18 and two data line ports 20, or more generally, a set of interface ports 16 comprising a plurality of communications ports 18 and one or more data line ports 20. The MPU module 10 may, in some embodiments, be programmed using, for example, an Ethernet remote PC management system 22. A video input panel 24 may be provided for gathering video signals from a set of cameras 26, which may include fixed cameras 28 and moveable cameras 30, such as dome-mounted cameras. In some embodiments, one or more data line ports 20 may be used by MPU module 10 to control movement of the moveable cameras 30, for example, via a camera remote control unit 32. Video monitors 34 may also be connected to video input panel 24. One or more keyboards 36 may be used to communicate with MPU module 10. This communication may, for example, specify the video to display on particular monitors 34 and/or command movements of particular moveable cameras 30. In some embodiments, moveable cameras 30 may comprise control-fixed or variable-speed domes, pan/tilts, and/or cameras with motorized lenses. Communications ports 18 may be used not only for keyboards 36, but also for alarm interface units, satellite system CPUs, recorder control devices, third party interfaces, computers, and so forth. Each port can be expanded with an optional port expander (not shown in FIG. 1), for example, up to four ports.

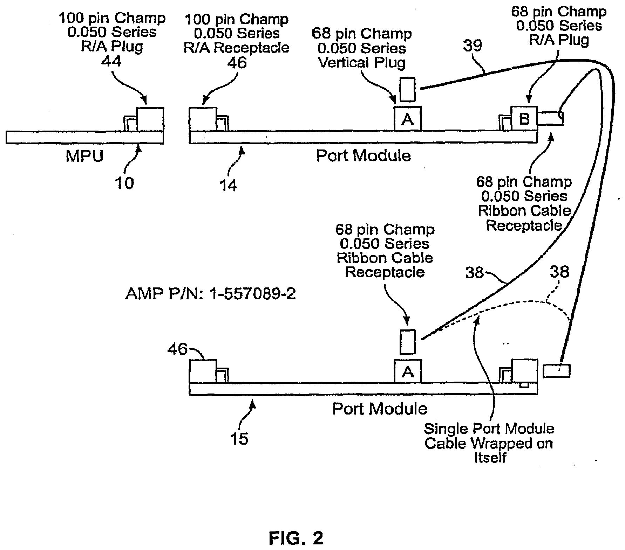

In some embodiments of the present invention and referring to FIG. 2, two port modules 14 and 15 may be connected using a ribbon cables 38 and 39 to provide a total of sixteen RS-232 ports 18 and two data line ports that can be independently controlled from an MPU module 10 connected to either of the port modules, thereby providing an inherent passive hot switch 40 with redundancy and hot stand-by CPU capability. Embodiments of both modules are described herein. Also, as shown in FIG. 2, port module 14 and MPU module 10 may include a mating side-mounted plug 44 and a side-mounted receptacle 46 to allow MPU module 10 and port module 14 to mount side-by-side on a single-width rack (not shown in FIG. 2), for example, a standard 19 inch rack.

Referring again to FIG. 1, the MPU modules 10 in some embodiments may have an IP 10/100 Ethernet interface and may be operationally connected to computers 22 individually or in a network. This IP interface can be used for various features in an initial system and can be used for IP compressed video in an expanded system.

MPU module 10 can be a standalone module, however the port module 14 in some embodiments requires an MPU 10 module for control and power. For hot stand by redundancy a port module 14 can be connected to a second MPU module 10 through another port module 14. MPU module 10 can be used without an attached port module 14 in some embodiments for many separate video system components and standalone CCTV functions. Rear panel connects may be provided in some embodiments for all interfaces of both MPU module 10 and port module 14.

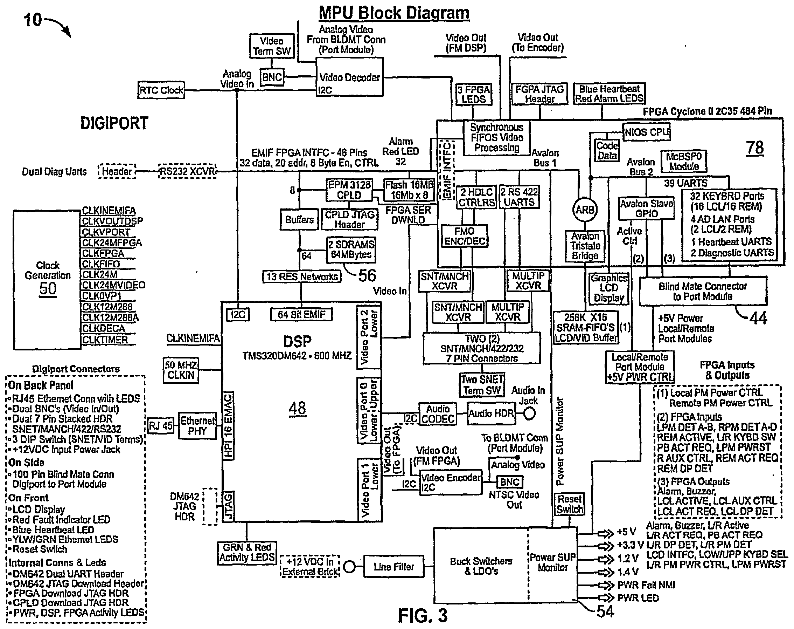

In some embodiments and referring to FIG. 3, MPU module 10 may comprise a general purpose video system control and DSP CPU (digital signal processor central processor unit) module 48, a time of day clock 50, a watchdog timer 54 to detect processor lock up, power fail detection, alert, and reset circuitry, and memory 56. For example, in at least one configuration, 4MB of flash memory is provided, as well as 32 MB of SDRAM memory. In addition, a field programmable gate array 78 is also provided. Additional components for buffering, timing, encoding, decoding, etc. also may be provided.

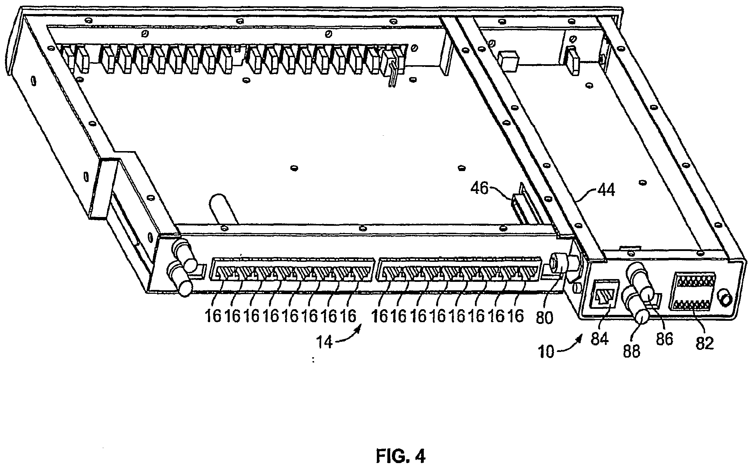

Referring to FIG.4, MPU module 10 may be provided with rear panel I/O interfaces, such as the following:
Rear panel features and interface connectors, which may include interface(s) to OEM and legacy equipment 82, a 10/100 Base T Ethernet port RJ45 connector 84 with build in LEDs, a video input BNC connector 86, with a selectable line termination switch, and a video output BNC connector 88 may be provided.

Front panel features (not shown in FIG. 4) may include a LCD module with graphics capability, a reset button on a printed circuit board (PCB) located behind a hole in the front panel such that inserting a common object such as a paper clip can reset the processor, and various LED indicators.

A parallel blind mate connector 44 may be provided as an interface to port module 14. This interface may provide, in at least one configuration, thirty-two asynchronous UART interfaces, four data line interfaces, power for the port module 14, and passive hot switch fail safe tri-stating signal lines. The connector 44 attaches to a matching connector 46 on the side of port module 14. The physical interconnection of port module 14 and MPU module 10 is facilitated by a connection system that may include, for example, a knurled knob 80 that is configured to mechanically adjust the clearance between MPU module 10 and port module 14.

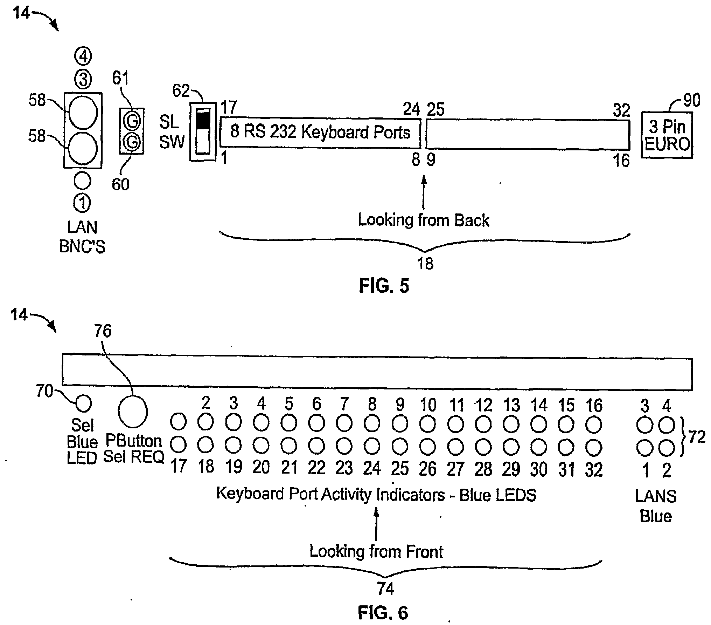

Internal functions that may be provided by port module 14 in some embodiments of the present invention include a duplicate power supply and sharing and switch over from connected MPU modules 10, as well as system heartbeat monitoring and control logic and signals. Also, and referring to FIG. 5, port module 14 may include the following I/O interfaces in some embodiments:
Rear panel features and interface connectors may include, for example, in at least one configuration, two data line outputs 58 with BNC female connectors, two aligned LEDs 60, 61 to indicate "Higher" or "Lower" selected port range, a selection switch for "Higher" or "Lower" port range, sixteen RS-232 ports 18 containing Tx, Rx, and GND signals with RJ-45 female connectors, and an output alarm relay 90, for example, with a three pin Euro-style plug connector.

Referring to FIG. 6, front panel features may include, in at least one configuration, a CPU selected/backup unit selection push button switch 76, a LED indicator 70 indicating a selected CPU, data line activity LEDs 72, and RS-232 Tx and Rx activity indicators (for example, two rows of sixteen LEDs 74).

A parallel blind mate connector interface 44 to MPU module 10 is provided in some embodiments. The connector 44 may include, in at least one configuration, thirty-two asynchronous UART interfaces, four data line interfaces, power from MPU module 10, and passive hot switch fail safe tri-stating signal lines.

Also included in at least one configuration of port module 10 are sixteen RS-232 driver/receiver circuits, two data line drivers, and a ribbon cable connection (e.g., connection with ribbon cables 38 and 39 to connect the two port modules 14, 15 together. The ribbon cable connection may include sixteen asynchronous UART interfaces, two data line interfaces, power from MPU module 10, and passive hot switch fail safe tri-stating signal lines.

Among the various features provided in some embodiments of the present invention, CPU configuration and status monitoring software may retrieve, archive, and load back CPU data. The software may provide IP network connection to all auxiliary systems, and may be configured to concurrently update dual mode CPUs. In addition, some embodiments of the CPU configuration and status monitoring software can provide real-time CPU status. Also, firmware update capability may be provided in some embodiments.

Another of the various features that may be provided is activity logging and reporting to, for example, an IP network PC 22. The PC 22 may be utilized for setup and file storage, and can be the same PC 22 used to run configuration software.

Yet another feature that may be provided is a snapshot feature that can store a snapshot upon request to IP network PC 22. For example, an operator, using a keyboard entry, can cause a video frame to be captured, compressed, and sent to a network PC 22, in any known manner, and where the video frame is stored in a predesignated file directory, with the file name including an operator ID, time and date.

Another feature that may be provided in some embodiments is email text messaging. The software package may email information regarding, for example, CPU failure, switchover status, or alarm messages to a specified email address using any known process. Also, some embodiments may provide the ability to synchronize clock time to a network time protocol (NTP) server.

Some exemplary embodiments of port modules are described herein as providing sixteen RS-232 ports 18 and two data lines. However, it will be understood that other embodiments may provide different numbers of, and/or different types of communications ports and/or data lines.

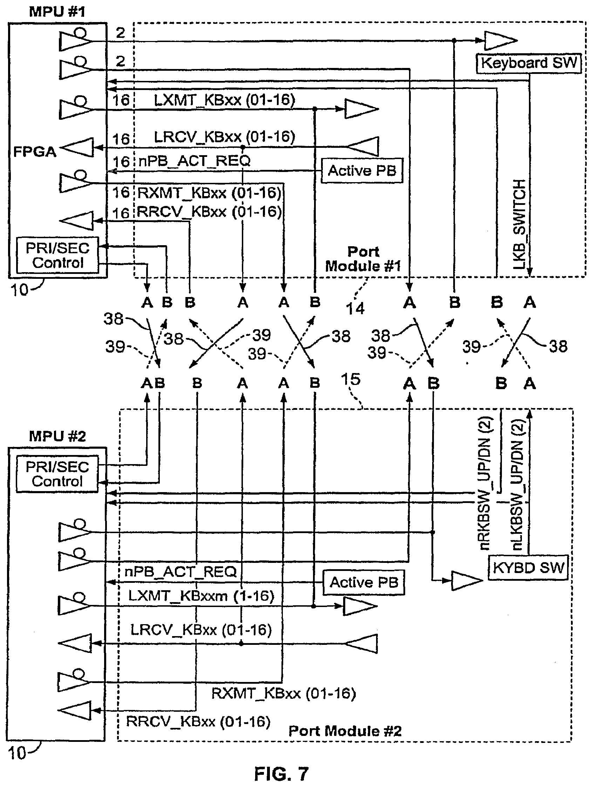

In some embodiments of the present invention and referring to FIG. 7 as well as FIG. 2, the two port modules 14, 15 may be connected with cross over ribbon cables 38, 39, and each port module may provide sixteen RS-232 ports 18 and two data lines 20. All thirty-two RS-232 ports 18 and four data lines 20 may be controlled from either MPU 10. Inherent logic can determine which port module 14 or 15 should be the selected controlling unit and which should be the back up unit. The cross over ribbon cables 38, 39 allow two identical port modules 14, 15 to uniquely map the communications ports 18 and data lines 20 to be additional ports and data lines rather than overlap with existing port and data line designations, thus providing the ability to expand the number of ports and reducing or eliminating, for example, contention. All parts on these shared port modules may be passive electronics, except for individual drivers and, in some embodiments, LED indicator circuitry that is not mission critical. Any driver failure would affect only the associated port. MPU modules 10 in some embodiments may utilize the following information from port modules 14:
1. Is this port module the selected port module?
2. Is another port module 15 present?
3. Is the other MPU module 10 present?
4. Is this port module 14 a lower or higher port module? (For example, in at least one configuration, a lower port module has ports 1-16 and a higher port module has ports 17-32.)
5. Is the other port module 15 data line OK?
6. Is the other port module 15 heartbeat signaling OK?
7. Are both the A and B cables (e.g., in some embodiments, ribbon cables) connected?

In at least one configuration, there are eight lines between the port modules 14 and 15 to provide information on the status of the other port module, and these lines may provide the following information:
1. Is a remote port module present and connected with cable A?
2. Is a remote port module present and connected with cable B?
3. Is an MPU module 10 present?
4. Is the other port module a lower or higher port module?
5. Other information is carried on an asynchronous serial UART data line for heart beat and status communications.

On power up, MPU module or modules 10 may check the state of the lower/higher selection switches on port modules 14, 15. If the switches 62 are set to opposite states from each other there is no confusion on where the lower and higher ports are located. Otherwise, if both switches 62 are set the same way, port module 14 will become the selected unit and MPU module or modules 10 will, in at least one configuration:
1. Not enable tri-state drivers to the other port module RS-232 and AD Data Line ports until the switches 62 are not set the same way and require a reset.
2. Operate the local RS-232 ports (Lower(1-16) or Higher(17-32)) for the selected range
3. Operate the local data lines as ports 1 and 2.
4. Determine if port module 14 cable is plugged into itself, for example, by transmitting the MAC address and a random number out of the interconnecting communication line to check if the signals are received back. If port module 14 is not connected to itself, the port module will display on the LCD an error code that indicates an incorrect switch setting and flash a fault indicator for attention. These alerts will be removed if the problem is corrected.

If the switches are changed during normal selected or backup operation, the port module 14 may continue to operate in the original manner, but may display an error code on the LCD indicating incorrect switch setting and sound, for example, a buzzer, close the relay, notify a configuration tool, and/or flash a red fault indicator for attention. These alerts will be removed if the problem is corrected.

Transmission driver control of the data lines and RS-232 drivers can be accomplished such that a backup port module 15 can take over (e.g., perform control and other operations) from a faulty selected port module 14 and, for example, at the same time prevent a defective stuck backup port module from forcing takeover from a good selected port module. Exemplary control conditions for the transmission line control are shown below in Table 1.

**Table 1**

| **Remote module data line** | **Remote module heartbeat** | **Condition description** | **Action** |
|---|---|---|---|
| Bad | Bad | Total Failure | Take over REQ |
| Bad | Good | AD Data Line out | Take over REQ |
| Good | Bad | No Heartbeat | Error Alert¹ |
| Good | Good | Normal operation | Operate Normal |

After power comes on, an MPU module 10 may, in at least one configuration, stay in backup mode if there is another selected MPU module. Or, if there is not another MPU module 10 indicated within a few seconds, the MPU module 10 will become the selected MPU module. Otherwise, if both MPU modules power up within a few seconds, then the following steps may occur:
1. If either MPU module 10 has a semaphore set in flash memory indicating that a SEL (select) pushbutton for that MPU module 10 was the last one pushed, then that MPU module 10 will be the active MPU.
2. If neither or both MPU modules 10 have the semaphore set in flash memory indicating the SEL (select) pushbutton for that MPU module 10 was the last one pushed, then the lower port numbered MPU module 10 as determined by a slide switch (not shown) will become the selected one (e.g. active device), and the other MPU module 10 will become the backup one.

The selected request push button switch on a port module 14 may connect to a local MPU module 10 field programmable gate array (FPGA) 78 (shown in Figure 3), and be passed through to the local CPU. When the selected request push button is pressed on the local MPU module 10 and is operational above a set level, a request selected takeover will be made to the local FPGA 78 which will relay the signal to the remote unit.

If the FPGA 78 receives the selected takeover request signal the FPGA 78 may immediately and directly enter backup mode. The selected takeover request signal may be indicated by a series of fixed length pulses in some embodiments, and the sending FPGA 78 may be prevented from switching to the selected unit until the other MPU module 10 goes to backup to prevent both driving the data transmitters.

If the watchdog timer and other CPU checking circuitry of the FPGA 78 are not indicating correct CPU operation, in some embodiments, the watchdog timer may reset the CPU and/or prevent selected takeover requests from being relayed to the remote MPU module 10.

Other failsafe operations of "take over circuitry" for data line and RS-232 drivers may include proper operation if the ribbon cable or MPU connectors become unplugged, and/or loop through or passive pull down resistor techniques used to prevent a single active component fault from disabling system.

An exemplary switch over decision matrix is provided below in Table 2.

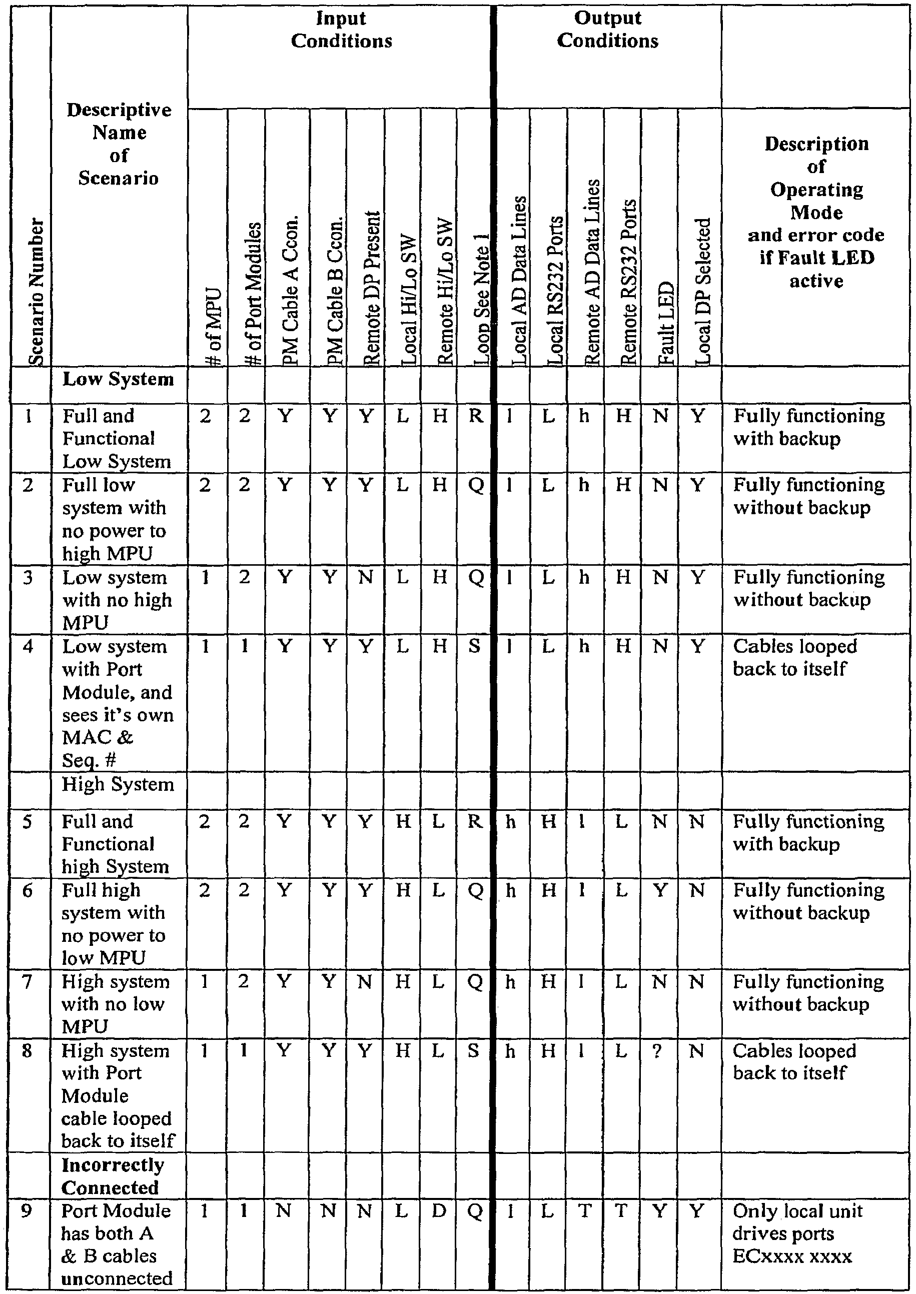

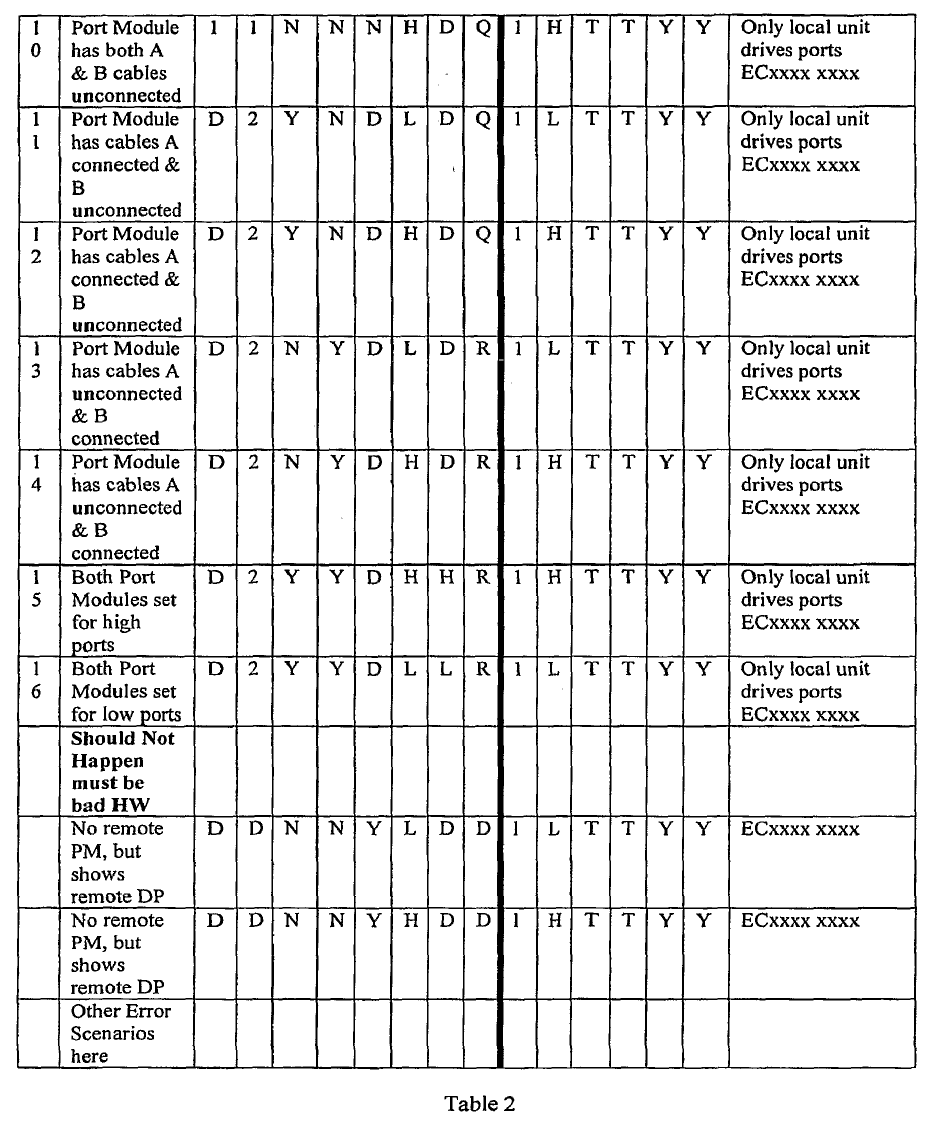

It should be noted, and as shown below in Table 3, that Loop is S when the unit sends its MAC address and a random sequence number out the Local UART and receives a signal back from the Remote UART line and the Loop is R if a functioning Remote unit is detected; and the loop is Q if nothing is detected on the RCUART_REC signal line.

**Table 3**

| *(i)* | *KEY* | |
|---|---|---|
| Yes | | |
| | **I.** | Y |
| No | **N** | |
| Don't care | **D** | |
| Lower | **L** | |
| Higher | **H** | |
| Lower AD Data Lines | **I** | |
| Higher AD Data Lines | **h** | |
| Tri-state, high impedance | **T** | |
| Remote unit seen on loop line | **R** | |
| Self unit seen on loop line | **S** | |
| Quiet loop line, no data seen | **Q** | |

The MPU module 10 may be a single manufactured unit that may be used for several functions, thereby greatly reducing the number of items that need to be produced by a manufacturer and stocked by a distributor, and purchased and kept as spare parts by a user. An exemplary MPU module 10 may be used as a primary selected MPU module 10 operatively connected to port module 14, or as a backup MPU module 10 operatively connected to port module 14.

If more ports are required, additional MPU modules 10 and port module pairs may be added to the system and connected through an IP Ethernet. Also, the MPU module 10 may be used to control a small video switch integrated into a port module-size unit. An MPU module 10 may also be used as a protocol unit to control other devices in a CCTV system as either a freestanding unit or, for example, four such units on a standard 19-inch rack shelf. An MPU module 10 may also be used as a video digital signal processor (DSP) operatively connected to a CCTV system via IP and providing digital video functions such as codec functions, motion detection, and video loss detection. Video DSP units may also be either a freestanding unit or, for example, four to a standard 19-inch rack shelf.

As a single manufactured item that can be used for several functions, MPU module 10 can greatly reduce the number of items that need to be produced and stocked. This feature is also useful to a user because it reduces the number of spare units and types of modules to purchase. Multiple purpose unit (MPU) 10 for a video matrix switching system, for example, may be configurable in a plurality of ways, including any combination of one or more of the following: a primary selected MPU for a port module, a backup MPU for a port module, an additional MPU for an additional port module for a video matrix switching system already having at least one MPU and a port module, as a controller of a video switch, as a protocol unit to control other devices in the video matrix switching system, and/or as a video DSP to provide digital video functions, among others.

In an exemplary configuration, the connection between the port module 14 (or a small video switch unit) and the MPU module 10 is on a side of the MPU module 10 that allows both the front and back of the MPU module 10 to be available for connectors, switches, display panel, LED indicators, etc. Also, the side connection provides an aesthetic enclosure and is out of the way when used free standing or four on a shelf.

A heart beat state machine can be provided in some embodiments of the present invention. For example, a state machine can be used to provide the hot swap active standby feature. Dependent upon hardware signal inputs and the information received from the heartbeat messaging protocol, the state machine can determine which of two connected port modules should be the selected device and switch the status of the port modules 14 when needed.

A heart beat message protocol can be provided in exemplary configurations of the present invention in different manners. For example, a fixed-size binary formatted messaging packet can be transmitted between two devices to maintain heart beat status and to transmit information to determine whether a remote device is properly running. The message packet can contain information that can be used as an input for the heart beat state machine. The messaging protocol can be used to inform a remote unit when to switch from a selected unit to a backup unit. The messaging protocol can include a sequence and acknowledgement handshake and timing characteristics that are used to determine the state of the remote device.

Also, in some embodiments, the communication interface may share memory layout and interface methods. For example, DSP and network I/O system (NIOS) processors may communicate using a shared-memory model that provides a shared memory structure layout design. This layout design may include activity registers that indicate transmission or reception activity for all interface ports (e.g., communication ports and data ports) serviced by the NIOS processor. The layout may include port configuration data, pointers to allocated FIFO buffers, status information for the ports and an area for LCD display data and status. A polling method may be used to share data and may use registers that indicate recent activity. Data from a FIFO may be obtained using a push-pull interface that allows both DSP and NIOS processors to access the data without pointer corruption.

A software watchdog module may be used by the MPU module 10 to present an interface that allows tasks to register at run-time when the tasks indicate that they are to be monitored. The monitored tasks may specify the software watchdog timeout period and may select the action to take on a timeout. The software watchdog module may handle the hardware watchdog and monitor the registered tasks, taking appropriate actions when registered tasks timeout. Supported actions may include logging the condition of a task, stopping and restarting the task, resetting a device, among others.

A fault logging module may be provided to present an interface that allows other software modules to declare faults, specify fault severity level, provides a set of fault data, among others. Based upon the severity level, the fault may be ignored, displayed, transmitted to other devices, logged as a fault report in flash memory and/or cause a device reset. The level at which each of the actions is taken may be run-time configurable in some embodiments.

Software faults may be logged into a flash memory using a fixed size binary formatted 128-byte report packet that contains time and count data as well as the fault information. The reports can be logged in a circular buffer using the flash memory area reserved for the logs.

In some embodiments of the present invention, the number of concurrently usable ports can be more than doubled in a enclosure that is half the size of a combination of conventional hot switches and with two CPU units. Furthermore, the MPU module 10 may be used for many subsystem components in a CCTV system. Thus, easy swap out of an active electronics processor module can be performed without disconnecting a multitude of port connecting cables.

Also, in some embodiments of the present invention, the system monitoring and fault logging module provides a failure resistant redundant system. Modifications to the various embodiments are contemplated. For example, a LCD front panel may be provided on the MPU modules 10, in which LED indicators provide status information to monitor operation directly from the MPU modules 10. An IP Ethernet may be connected to a PC with software for configuration and status monitoring, and another PC program may be used to log system activity. IP connected PC based programs can thus provide an additional level of system monitoring.

The use of the MPU module 10 to control a small video switch is also possible in some embodiments, as is the use of an MPU module 10 and port module 14 pairs to provide more ports through an IP Ethernet.

Many modules and features of various embodiments of the present invention are optional and can be omitted. For example, CCTV systems can be custom built in a size and with features required by a specific user application as determined by, for example, design application engineers. Further, embodiments of the present invention can be provided as pre-configured systems or as components though direct, indirect, dealer, and distributor sales channels.

## Claims

1. A controller for a video matrix switching system (12), said controller comprising:
at least a first multiple purpose unit, MPU, module (10) configured to provide video and control for a multi-camera video closed circuit television , CCTV, system;
at least a first port module (14) connectable to the MPU module and having driver electronics for a set of interface ports (16); and
at least a second port module (15) configured to operationally couple with said first port module (14) to provide an additional set of interface ports independently controllable by said MPU module (10) or modules operationally coupled to either the first port module (14) or the second port module (15), and configured to provide a passive hot switch (40) with redundancy and hot stand-by CPU capability, wherein
said port module (14) includes a knob configured to removably secure said first port module (14) to said MPU module (10) side by side in a rack and to operatively couple said first port module (14) to said MPU module (10) utilizing side- mounted mating connectors.

2. A controller in accordance with Claim 1 wherein both the first port module (14) and the MPU module are configured for mounting in a rack and both have rear panel connections for all electrical interfaces.

3. A controller in accordance with Claim 1 configured to capture and send a video frame for storage to a network upon operator request.

4. A controller in accordance with Claim 1 wherein said interface ports (16) comprise a plurality of data line ports (20) having coaxial connectors, and said interface ports (16) further comprise a plurality of serial communications ports having at least transmit, receive, and ground signals.

5. A controller in accordance with Claim 1 wherein said MPU module (10) includes a digital signal processor (DSP), indicator electronics on a front panel configured to be visible from the front of a rack, when said MPU module (10) is mounted in a rack, and a protocol driver configured to remotely control a plurality of cameras (28, 30).

6. A controller in accordance with Claim 1 wherein said first port module (14) is a passive module having no central processing unit (CPU).

7. A controller in accordance with Claim 1 wherein said MPU module (10) includes a software watchdog module configured to present an interface that monitors specified tasks and takes action when any of the specified tasks time out.

8. A controller in accordance with Claim 8 wherein the watchdog module is configured to at least one of log the condition of a task, stop a task, restart a task or reset a device when a specified task times out.

9. A controller in accordance with Claim 1 further comprising a fault logging software module configured to receive declared faults from other software modules, to specify a fault severity level, and to receive a set of fault data.

10. A controller in accordance with Claim 10 further configured to ignore, display, transmit to other devices, log a fault report or cause a device reset dependent upon the fault severity level.

11. A controller in accordance with one of the preceding claims comprising at least a standby MPU module and an active MPU module (10).

12. A controller in accordance with Claim 1, wherein the interface ports comprise a plurality of RS-232 serial communications ports.

13. A controller for a video matrix switching system (12), said controller comprising:
at least a first multiple purpose unit, MPU, module (10) configured to provide video and control for a multi-camera video closed circuit television , CCTV, system;
at least a first port module (14) connectable to the MPU module and having driver electronics for a set of interface ports (16); and
a second port module (15) operationally coupled to the first port module (14), the second port module comprising driver electronics for a second set of interface ports (16) comprising a plurality of serial communication ports; and
a second MPU module connectable to the second port module (15), wherein each of the first and the second MPU modules is configured to control both of the first and second port modules (14, 15), and configured to provide a passive hot switch with redundancy and hot stand-by CPU capability, wherein
said port module (14) includes a knob configured to removably secure said first port module (14) to said first MPU module (10) side by side in a rack and to operatively couple said first port module (14) to said first MPU module (10) utilizing side- mounted mating connectors.

## Patentansprüche

1. Steuergerät für ein Videomatrix-Schaltsystem (12), wobei das Steuergerät Folgendes umfasst:
mindestens ein erstes Mehrzweckeinheit(MPU - *multiple purpose* unit)-Modul (10), das zum Bereitstellen von Video und Steuerung für ein Mehrkamera-Videoüberwachungs(CCTV - *closed circuit television*)-System konfiguriert ist;
mindestens ein erstes Anschlussmodul (14), das an das MPU-Modul angeschlossen werden kann und Treiberelektronik für einen Satz Schnittstellenanschlüsse (16) aufweist; und
mindestens ein zweites Anschlussmodul (15), das zum wirkungsmäßigen Verbinden mit dem ersten Anschlussmodul (14) zum Bereitstellen eines zusätzlichen Satzes von Schnittstellenanschlüssen, die unabhängig durch das MPU-Modul (10) oder Module, die wirkungsmäßig entweder mit dem ersten Anschlussmodul (14) oder dem zweiten Anschlussmodul (15) verbunden sind, steuerbar sind, konfiguriert ist und zum Bereitstellen eines passiven Hot-Switch (40) mit Redundanz- und Hot-Standby-CPU-Fähigkeit konfiguriert ist, wobei
das Anschlussmodul (14) einen Knopf beinhaltet, der zum entfernbaren Sichern des ersten Anschlussmoduls (14) an dem MPU-Modul (10) nebeneinander in einem Gestell und zum wirkungsmäßigen Verbinden des ersten Anschlussmoduls (14) mit dem MPU-Modul (10) unter Ausnutzung seitlich angebrachter Gegensteckverbinder konfiguriert ist.

2. Steuergerät nach Anspruch 1, wobei sowohl das erste Anschlussmodul (14) als auch das MPU-Modul zum Installieren in einem Gestell konfiguriert sind und beide Rückwandanschlüsse für alle elektrischen Schnittstellen aufweisen.

3. Steuergerät nach Anspruch 1, welches zum Erfassen und Senden eines Videoframes zur Speicherung an ein Netzwerk auf Anfrage eines Bedieners konfiguriert ist.

4. Steuergerät nach Anspruch 1, wobei die Schnittstellenanschlüsse (16) mehrere Datenleitungsanschlüsse (20) mit Koaxialsteckern umfassen und die Schnittstellenanschlüsse (16) ferner mehrere serielle Kommunikationsanschlüsse, die mindestens Sendesignal, Empfangssignal und Erde aufweisen, umfassen.

5. Steuergerät nach Anspruch 1, wobei das MPU-Modul (10) einen digitalen Signalprozessor (DSP), Anzeigeelektronik an einer Frontplatte, die derart konfiguriert ist, dass sie von der Vorderseite eines Gestells aus sichtbar ist, wenn das MPU-Modul (10) in einem Gestell installiert ist, und einen Protokolltreiber, der zum entfernten Steuern mehrerer Kameras (28, 30) konfiguriert ist, beinhaltet.

6. Steuergerät nach Anspruch 1, wobei das erste Anschlussmodul (14) ein passives Modul ist, das keine zentrale Verarbeitungseinheit (CPU - *central processing unit*) aufweist.

7. Steuergerät nach Anspruch 1, wobei das MPU-Modul (10) ein Software-Watchdog-Modul beinhaltet, das zum Präsentieren einer Schnittstelle konfiguriert ist, die spezifizierte Aufgaben überwacht und handelt, wenn es bei einer der spezifizierten Aufgaben zu einer Zeitüberschreitung kommt.

8. Steuergerät nach Anspruch 8, wobei das Watchdog-Modul zu mindestens einem aus dem Protokollieren des Zustands einer Aufgabe, dem Stoppen einer Aufgabe, dem Neustarten einer Aufgabe oder dem Zurücksetzen eines Gerätes, wenn es bei einer spezifizierten Aufgabe zu einer Zeitüberschreitung kommt, konfiguriert ist.

9. Steuergerät nach Anspruch 1, welches ferner ein Störungserfassungs-Softwaremodul umfasst, das zum Empfangen erklärter Störungen von anderen Softwaremodulen, zum Spezifizieren eines Störungsschwerelevels und zum Empfangen eines Satzes von Störungsdaten konfiguriert ist.

10. Steuergerät nach Anspruch 10, welches ferner zum Ignorieren, Anzeigen, Übertragen auf andere Geräte, Protokollieren eines Störungsberichtes oder Veranlassen einer Gerätezurücksetzung in Abhängigkeit von dem Störungsschwerelevel konfiguriert ist.

11. Steuergerät nach einem der vorhergehenden Ansprüche, welches mindestens ein Standby-MPU-Modul und ein aktives MPU-Modul (10) umfasst.

12. Steuergerät nach Anspruch 1, wobei die Schnittstellenanschlüsse mehrere serielle RS-232-Kommunikationsanschlüsse umfassen.

13. Steuergerät für ein Videomatrix-Schaltsystem (12), wobei das Steuergerät Folgendes umfasst:
mindestens ein erstes Mehrzweckeinheit (MPU-*multiple purpose unit*)-Modul (10), das zum Bereitstellen von Video und Steuerung für ein Mehrkamera-Videoüberwachungs (CCTV - *closed circuit television*)-System konfiguriert ist;
mindestens ein erstes Anschlussmodul (14), das an das MPU-Modul angeschlossen werden kann und Treiberelektronik für einen Satz Schnittstellenanschlüsse (16) aufweist; und
ein zweites Anschlussmodul (15), das wirkungsmäßig mit dem ersten Anschlussmodul (14) verbunden ist, wobei das zweite Anschlussmodul Treiberelektronik für einen zweiten Satz Schnittstellenanschlüsse (16) umfasst, der mehrere serielle Kommunikationsanschlüsse umfasst; und
ein zweites MPU-Modul, das an das zweite Anschlussmodul (15) angeschlossen werden kann, wobei jedes des ersten und des zweiten MPU-Moduls zum Steuern sowohl des ersten als auch des zweiten Anschlussmoduls (14, 15) konfiguriert ist und zum Bereitstellen eines passiven Hot-Switch mit Redundanz- und Hot-Standby-CPU-Fähigkeit konfiguriert ist, wobei das Anschlussmodul (14) einen Knopf beinhaltet, der zum entfernbaren Sichern des ersten Anschlussmoduls (14) an dem ersten MPU-Modul (10) nebeneinander in einem Gestell und zum wirkungsmäßigen Verbinden des ersten Anschlussmoduls (14) mit dem ersten MPU-Modul (10) unter Ausnutzung seitlich angebrachter Gegensteckverbinder konfiguriert ist.

## Revendications

1. Contrôleur pour un système de commutation vidéo matriciel (12), ledit contrôleur comprenant :
au moins un premier module d'unité multifonction, MPU, (10) configuré pour fournir de la vidéo et des commandes pour un système de télévision en circuit fermé multi-caméra, CCTV;
au moins un premier module de ports (14) apte à être connecté au module MPU et ayant des circuits pilotes électroniques pour un ensemble de ports d'interface (16) ; et
au moins un deuxième module de ports (15) configuré pour être couplé fonctionnellement audit premier module de ports (14) afin de fournir un ensemble additionnel de ports d'interface aptes à être commandés indépendamment par ledit module MPU (10) ou par des modules couplés fonctionnellement au premier module de ports (14) ou bien au deuxième module de ports (15), et configuré pour fournir une commutation passive à chaud (40) avec redondance et une capacité de CPU en veille à chaud, ledit module de ports (14) comprenant un bouton configuré pour fixer ledit premier module de ports (14) de manière amovible audit module MPU (10), côte à côte dans un châssis, et pour coupler fonctionnellement ledit premier module de ports (14) audit module MPU (10) en utilisant des connecteurs de couplage à montage latéral.

2. Contrôleur selon la revendication 1, dans lequel le premier module de ports (14) et module MPU sont tous les deux configurés de façon à pouvoir être montés dans un châssis et ont tous les deux des connexions de panneau arrière pour toutes les interfaces électriques.

3. Contrôleur selon la revendication 1, configuré pour capturer et envoyer une trame vidéo à un réseau pour stockage, lors d'une demande d'un opérateur.

4. Contrôleur selon la revendication 1, dans lequel lesdits ports d'interface (16) comprennent une pluralité de ports de lignes de données (20) ayant des connecteurs coaxiaux, et lesdits ports d'interfaces (16) comprennent en outre une pluralité de ports de communication série ayant au moins des signaux de transmission, de réception et de terre.

5. Contrôleur selon la revendication 1, dans lequel ledit module MPU (10) comporte un processeur de signaux numériques (DSP), des circuits électroniques indicateurs sur un panneau avant, configurés pour être visibles depuis l'avant d'un châssis, lorsque ledit module MPU (10) est monté dans un châssis, et un pilote de protocole configuré pour commander à distance une pluralité de caméras (28, 30).

6. Contrôleur selon la revendication 1, dans lequel ledit premier module de ports (14) est un module passif n'ayant pas d'unité centrale de traitement (CPU).

7. Contrôleur selon la revendication 1, dans lequel ledit module MPU (10) comporte un module de chien de garde logiciel configuré pour présenter une interface qui surveille des tâches spécifiées et qui prend des mesures lorsque l'une quelconque des tâches spécifiées est interrompue.

8. Contrôleur selon la revendication 8, dans lequel le module de chien de garde est configuré pour effectuer au moins l'un d'un enregistrement de la condition d'une tâche, un arrêt d'une tâche, un redémarrage d'une tâche ou une réinitialisation d'un dispositif lorsqu'une tâche spécifiée est interrompue.

9. Contrôleur selon la revendication 1, comprenant en outre un module logiciel d'enregistrement de panne configuré pour recevoir des pannes déclarées en provenance d'autres modules logiciels, pour spécifier un niveau de sévérité de panne, et pour recevoir un ensemble de données de panne.

10. Contrôleur selon la revendication 10, configuré en outre pour ignorer, afficher, transmettre à d'autres dispositifs, enregistrer un rapport de panne ou provoquer la réinitialisation d'un dispositif en fonction du niveau de sévérité de panne.

11. Contrôleur selon l'une quelconque des revendications précédentes, comprenant au moins un module MPU en veille et un module MPU actif (10).

12. Contrôleur selon la revendication 1, dans lequel les ports d'interface comprennent une pluralité de ports de communication série RS-232.

13. Contrôleur pour un système de commutation vidéo matriciel (12), ledit contrôleur comprenant :
au moins un premier module d'unité multifonction, MPU, (10) configuré pour fournir de la vidéo et des commandes pour un système de télévision en circuit fermé multi-caméra, CCTV;
au moins un premier module de ports (14) apte à être connecté au module MPU et ayant des circuits pilotes électroniques pour un ensemble de ports d'interface (16) ; et
un deuxième module de ports (15) couplé fonctionnellement au premier module de ports (14), le deuxième module de ports comprenant des circuits pilotes électroniques pour un deuxième ensemble de ports d'interface (16) comprenant une pluralité de ports de communication série ; et
un deuxième module MPU apte à être connecté au deuxième module de ports (15), où chacun des premier et deuxième modules MPU est configuré pour commander le premier et le deuxième module de ports (14, 15), et configuré pour fournir une commutation passive à chaud avec redondance et une capacité de CPU en veille à chaud,
ledit module de ports (14) comprenant un bouton configuré pour fixer ledit premier module de ports (14) de manière amovible audit premier module MPU (10), côte à côte dans un châssis, et pour coupler fonctionnellement ledit premier module de ports (14) audit premier module MPU (10) en utilisant des connecteurs de couplage à montage latéral.
